## Europäisches Patentamt

## European Patent Office

## Office européen des brevets

(11) Veröffentlichungsnummer: **0 166 818**

**B1**

(12) **EUROPÄISCHE PATENTSCHRIFT**

(45) Veröffentlichungstag der Patentschrift:
08.03.89

(51) Int. Cl.⁴: **G 11 B 5/127, G 11 B 5/31**

(21) Anmeldenummer: **84115581.5**

(22) Anmeldetag: **17.12.84**

(54) **Schichtweise aufgebauter Magnetkopf für ein senkrecht zu magnetisierendes Aufzeichnungsmedium.**

(30) Priorität: **04.06.84 DE 3420746**

(43) Veröffentlichungstag der Anmeldung:
**08.01.86 Patentblatt 86/2**

(45) Bekanntmachung des Hinweises auf die Patenterteilung:
**08.03.89 Patentblatt 89/10**

(84) Benannte Vertragsstaaten:
**AT CH DE FR GB IT LI NL SE**

(56) Entgegenhaltungen:
EP-A-0 033 236
EP-A-0 071 489
US-A-3 639 699
US-A-4 277 809

PATENTS ABSTRACTS OF JAPAN, Band 7, Nr. 109 (P-196)(1254), 12. Mai 1983; & JP - A - 58 32 214 (MATSUSHITA DENKI SANGYO K.K.) 25.02.1983
IBM TECHNICAL DISCLOSURE BULLETIN, Band 20, Nr. 8, Januar 1978, Seiten 3311-3312, Armonk, N.Y., US; A.S. HOAGLAND: "Combined longitudinal and vertical magnetic recording head"
PATENTS ABSTRACTS OF JAPAN, Band 5, Nr. 9 (P-45)(681), 21. Januar 1981; & JP - A - 55 139 624 (TOKYO SHIBAURA DENKI K.K.) 31.10.1980
PATENTS ABSTRACTS OF JAPAN, Band 7, Nr. 188 (P-217)(1333), 17. August 1983; & JP - A - 58 88 812(MATSUSHITA DENKI SANGYO K.K.) 27.05.1983

(73) Patentinhaber: **Siemens Aktiengesellschaft Berlin und München, Wittelsbacherplatz 2, D-8000 München 2 (DE)**

(72) Erfinder: **Hillenbrand, Bernhard, Dr., Esperstrasse 45, D-8525 Uttenreuth (DE)**
Erfinder: **Schewe, Herbert, Dr., Haydnstrasse 58, D-8522 Herzogenaurach (DE)**

(56) Entgegenhaltungen: (Fortsetzung)
**PATENTS ABSTRACTS OF JAPAN, Band 7, Nr. 26 (P-172)(1171), 2. Februar 1983; & JP - A - 57 179 920 (MATSUSHITA DENKI SANGYO K.K.) 05.11.1982
PATENTS ABSTRACTS OF JAPAN, Band 6, Nr. 112 (P-124)(990), 23. Juni 1982; & JP - A - 57 40 722 (MATSUSHITA DENKI SANGYO K.K.) 06.03.1982
PATENTS ABSTRACTS OF JAPAN, Band 5, Nr. 38 (P-52)(710), 12. März 1981; & JP - A - 55 160 322 (HITACHI SEISAKUSHO K.K.)**

**Beschreibung**

Schichtweise aufgebauter Magnetkopf für ein senkrecht zu magnetisierendes Aufzeichnungsmedium

Die Erfindung bezieht sich auf einen Magnetkopf mit einem in Dünnfilm-Technik erstellten schichtweisen Aufbau auf einem nichtmagnetischen Substrat für ein Aufzeichnungsmedium, das mit einer magnetisierbaren Speicherschicht versehen ist, in welche längs einer Spur Informationen durch senkrechte (vertikale) Magnetisierung der Speicherschicht einzuschreiben sind, welcher Magnetkopf einen den magnetischen Fluß führenden ringkopfähnlichen Leitkörper mit zwei Magnetschenkeln aufweist, die aus mehreren magnetischen Schichten aus hochpermeablem Material vorbestimmter Sättigungsmagnetisierung bestehen und deren dem Aufzeichnungsmedium zugewandte Pole in Bewegungsrichtung des Kopfes gesehen hintereinander und mit vorbestimmtem Abstand zueinander angeordnet sind und die einen Zwischenraum begrenzen, durch welchen sich die Windungen einer zumindest weitgehend flachen Schreib-/Lesespulenwicklung erstrecken. Ein solcher Magnetkopf ist z. B. der DE-A-2 924 013 zu entnehmen.

Das Prinzip der senkrechten Magnetisierung zur Speicherung von Informationen ist allgemein bekannt (vgl. z. B. "IEEE Transactions on Magnetics", vol. MAG-16, no. 1, Jan. 1980, Seiten 71 bis 76; EP-A-0 012 910 oder die genannte DE-A-2 924 013). Für dieses Prinzip, das vielfach auch als vertikale Magnetisierung bezeichnet wird, sind besondere Aufzeichnungsmedien in Form von starren Magnetspeicherplatten, flexiblen Einzelplatten (Floppy Disks) oder Magnetbändern erforderlich. Ein entsprechendes Aufzeichnungsmedium weist mindestens eine magnetisierbare Speicherschicht vorbestimmter Dicke auf, welche ein magnetisch anisotropes Material, insbesondere aus einer CoCr-Legierung enthält. Dabei ist die Achse der sogenannten leichten Magnetisierung dieser Schicht senkrecht zur Oberfläche des Mediums gerichtet. Mittels eines besonderen Magnetkopfes werden dann längs einer Spur die einzelnen Informationen als Bits in aufeinanderfolgenden Abschnitten, auch Zellen oder Blöcke genannt, durch entsprechende Magnetisierung der Speicherschicht eingeschrieben. In der Praxis werden im allgemeinen die magnetischen Flußwechsel, d. h. die Übergänge von einer Magnetisierungsrichtung zur entgegengesetzten, als Informationen benutzt. Die sich so ergebenden Bits haben dabei eine vorbestimmte, auch als Wellenlänge bezeichnete Ausdehnung in Längsrichtung der Spur. Diese Ausdehnung kann im Vergleich zu der Grenze, die bei dem Verfahren der longitudinalen (horizontalen) Speicherung durch die Entmagnetisierung gegeben ist, wesentlich kleiner sein. Somit läßt sich nach dem Prinzip der senkrechten Magnetisierung die Informationsdichte in dem Aufzeichnungsmedium vorteilhaft vergrößern.

Die für das Prinzip der longitudinalen Magnetisierung bekannten Schreib- und Lese-Köpfe, d. h. Köpfe, mit denen sowohl die Schreib- als auch die Lese-Funktion auszuüben ist, können jedoch nicht ohne weiteres auch für eine senkrechte Magnetisierung eingesetzt werden. Bei Verwendung dieser Köpfe, die im allgemeinen ringkopfähnliche Gestalt haben, läßt sich zwar die auch bei dem Prinzip der senkrechten Magnetisierung angestrebte Flußführung zu einem möglichst geschlossenen Kreis mit geringem magnetischen Widerstand erreichen. Jedoch ist es schwierig, bei hohen Bit-Dichten und entsprechend kleiner Spaltweite des Ringkopfes ein hinreichend starkes Schreibfeld zu erzeugen.

Man sieht sich deshalb gezwungen, für das Prinzip der senkrechten Magnetisierung spezielle Schreib- und Leseköpfe zu entwickeln, deren Magnetschenkel zweckmäßig schichtweise aus Materialien hoher (relativer) Permeabilität $\mu_r$ in der Größenordnung von 1000 oder mehr und verhältnismäßig großer Sättigungsmagnetisierung von im allgemeinen über 10 kA/cm aufgebaut werden. Eine hierfür geeignete Ausführungsform eines entsprechenden Magnetkopfes weist im allgemeinen einen den magnetischen Fluß führenden Leitkörper mit einem Magnetschenkel auf, der einen sogenannten Hauptpol bildet, mit dem ein hinreichend starkes senkrechtes Magnetfeld zum Ummagnetisieren der einzelnen Abschnitte der Speicherschicht erzeugt wird. Der notwendige magnetische Rückschluß kann dann z. B. mittels eines sogenannten Hilfspoles vorgenommen werden, der sich beispielsweise auf derselben Seite wie der Hauptpol befindet und von einem weiteren Magnetschenkel gebildet wird (vgl. z. B. "IEEE Trans. Magn.", vol. MAG-17, no. 6, Nov. 1981, Seiten 3120 bis 3122 oder vol. MAG-18, no. 6, Nov. 1982, Seiten 1158 bis 1163; "J.Appl.Phys.", vol. 53, no. 3, 1982, Seiten 2593 bis 2595; EP-A-0 012 910 oder DE-A-2 924 013).

Bei diesem z. B. in der genannten DE-A-2 924 013 beschriebenen Magnetkopftyp mit ringkopfähnlicher Gestalt seines Leitkörpers soll der Hilfspol in jedem Falle nur zur magnetischen Flußrückführung dienen. Ein eventuelles Mitschreiben dieses Poles kann gegebenenfalls zwar in Kauf genommen werden, wenn ihm der schreibende Hauptpol nacheilt und somit vom Hilfspol geschriebene Informationen überschreiben kann. Um jedoch ein Mitlesen des Hilfspoles mit seiner ablaufenden Kante zumindest weitgehend zu unterdrücken, müßte der zwischen den beiden Polen ausgebildete sogenannte Luftspalt verhältnismäßig breit sein, um eine weitgehende Reduzierung der magnetischen Flußdichte am Hilfspol gewährleisten zu können. Entsprechende breite Spaltschichten lassen sich jedoch bei in mit der Schicht aus dem Material mit vorbestimmter geringer Sättigungsmagnetisierung an seinem Pol magnetisch gesättigt wird. Der erfindungsgemäße Magnetkopf kann somit für die Lesefunktion vorteilhaft in bekannter Weise als Ringkopf mit einem hohen Wirkungsgrad betrieben werden, zumal die Spaltweite zwischen den beiden Polen des Kopfes sehr klein gehalten werden kann.

Vorteilhafte Ausgestaltungen des Magnetkopfes nach der Erfindung gehen aus den abhängigen Ansprüchen hervor.

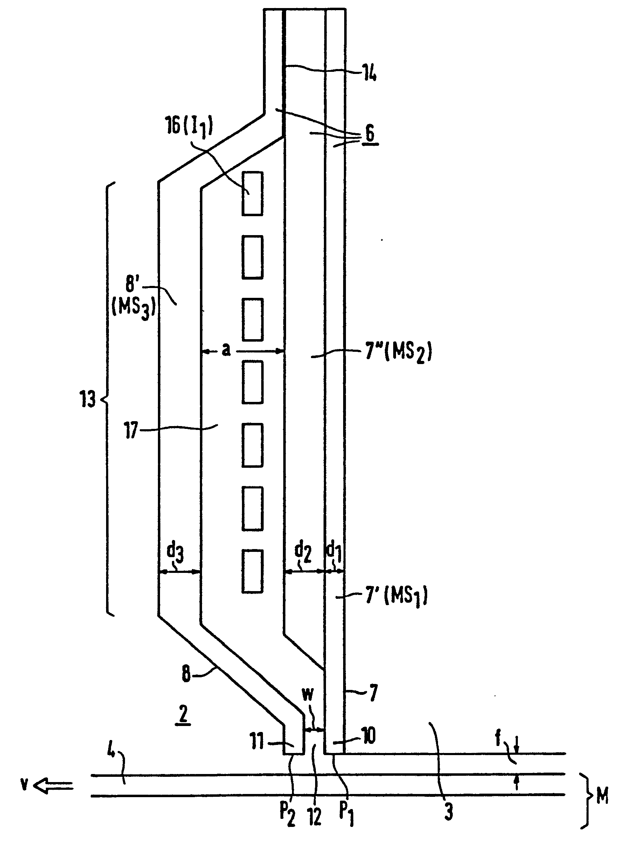

Zur weiteren Erläuterung der Erfindung wird nachfolgend auf die Zeichnung verwiesen, in deren Figur schematisch ein erfindungsgemäßer Magnetkopf als Längsschnitt veranschaulicht ist.

Bei dem in der Figur nur teilweise ausgeführten Magnetkopf zum Schreiben und Lesen wird von an sich bekannten ringkopfähnlichen Ausführungsformen mit schichtweisem Aufbau für das Prinzip der senkrechten (vertikalen) Magnetisierung ausgegangen (vgl. z. B. die genannte DE-OS-2 924 013, die EP-0 012 910 A1 oder die EP-0 071 489 A2). Der in der Figur allgemein mit 2 bezeichnete Kopf befindet sich auf der Flachseite eines Substrates 3, das die Stirn- oder Rückseite eines gebräuchlichen, als Flugkörper bezeichneten Elementes bildet, welches in der Figur nur angedeutet ist. Dieser Kopf ist relativ zu einem an sich bekannten, vertikal zu magnetisierenden Aufzeichnungsmedium M in geringer Flughöhe f von beispielsweise 0,2 μm längs einer Spur zu führen. Das Aufzeichnungsmedium M, z. B. eine Magnetspeicherplatte, weist eine Speicherschicht 4 insbesondere aus einer Co-Cr-Legierung auf, die gegebenenfalls auf ihrer dem Magnetkopf 2 abgewandten Seite mit weiteren Schichten, z. B. aus einer speziellen NiFe-Legierung, verbunden sein kann. Die relative Bewegungsrichtung des beispielsweise unter dem Kopf hinweggeführten Aufzeichnungsmediums M bezüglich des Kopfes ist durch eine mit v bezeichnete gepfeilte Linie angedeutet.

Der Magnetkopf 2 enthält einen den magnetischen Fluß führenden Leitkörper 6 mit zwei Magnetschenkeln 7 und 8. Diese Schenkel sind weitgehend und insbesondere in ihren dem Aufzeichnungsmedium M zugewandten Endbereichen 10 und 11 zumindest annähernd senkrecht zur Oberfläche des Aufzeichnungsmediums ausgerichtet und bilden dort jeweils einen Magnetpol $P_1$ bzw. $P_2$. Zwischen diesen beiden Polen ist ein Luftspalt 12 mit einer vorteilhaft geringen longitudinalen, d. h. in Bewegungsrichtung v weisenden Weite w von unter 1 μm, insbesondere unter 0,3 μm ausgebildet. In einem mittleren Bereich 13 des Kopfes ist der Abstand zwischen den beiden Magnetschenkeln 7 und 8 gegenüber der Spaltweite w erweitert, indem z. B. der hinsichtlich der Bewegungsrichtung rückwärtige Magnetschenkel 8 in diesem Bereich auf einen größeren Abstand a bezüglich des vorderen, gerade ausgebildeten und dem Substrat 3 am nächsten liegenden Magnetschenkel 7 führt. Außerhalb dieses Bereichs 13 ist auf der dem Aufzeichnungsmedium M abgewandten Seite der Magnetschenkel 8 in bekannter Weise in einem Verbindungsbereich 14 an den Magnetschenkel 7 angefügt, so daß sich die ringkopfähnliche Gestalt des Magnetkopfes 2 ergibt.

Ferner enthält der Magnetkopf 2 sowohl für die Lesefunktion als auch für die Schreibfunktion nach dem Prinzip der senkrechten (vertikalen) Magnetisierung eine insbesondere mehrlagige, flache Spulenwicklung 16, deren Windungen sich durch den zwischen den beiden Magnetschenkeln 7 und 8 in dem mittleren Bereich 13 ausgebildeten Zwischenraum 17 erstrecken.

Die beiden Magnetschenkel 7 und 8 des Magnetkopfes 2 weisen gemäß dem dargestellten Ausführungsbeispiel zusammen mindestens drei Magnetschichten hoher (relativer) Permeabilität $\mu_r$ mit einem Mindestwert von 1000, vorzugsweise von etwa 2000 auf. Dabei ist angenommen, daß der erste, dem Substrat 3 zugewandte Magnetschenkel 7 aus mindestens zwei Magnetschichten 7' und 7'' besteht, während der zweite, äußere Magnetschenkel 8 von mindestens einer Magnetschicht 8' gebildet ist. Gemäß der Erfindung soll nun das Material der den Magnetpol eines Magnetschenkels bildenden magnetischen Schicht zumindest im Bereich dieses Poles eine niedrige Sättigungsmagnetisierung MS von beispielsweise weniger als 8 kA/cm, insbesondere unter 5 kA/cm aufweisen, während das Material des den anderen Pol bildenden Magnetschenkels eine möglichst hohe Sättigungsmagnetisierung von beispielsweise mindestens 10 kA/cm, vorzugsweise mehr als 11 kA/cm haben soll. Dementsprechend besteht gemäß dem dargestellten Ausführungsbeispiel die den Magnetpol $P_1$ bildende Schicht 7' des (ersten) Magnetschenkels 7 aus dem Material mit der niedrigen Sättigungsmagnetisierung $MS_1$, wobei ihre in Bewegungsrichtung v weisende Dicke $d_1$ verhältnismäßig klein ist und beispielsweise etwa 1 bis 2 μm beträgt. Die vorteilhaft vorzusehende, außerhalb des Bereiches 10 des Poles $P_1$ mit der Schicht 7' verbundene weitere Magnetschicht 7'' soll hingegen aus einem Material mit einer möglichst hohen Sättigungsmagnetisierung $MS_2$ von beispielsweise mehr als 11 kA/cm bestehen und vorzugsweise auch eine größere Dicke $d_2$ in Bewegungsrichtung v als die zu ihr benachbarte Schicht 7' aufweisen. Aus einem Material mit entsprechend hoher Sättigungsmagnetisierung ($MS_3$) besteht auch die mindestens eine Magnetschicht 8' des den Pol $P_2$ bildenden (zweiten) Magnetschenkels 8, der in dem mittleren Bereich 13 eine ebenfalls größere Dicke $d_3$ im Vergleich zu der Dicke $d_1$ der Magnetschicht 7' hat. Vorzugsweise sind die Dicken $d_2$ und $d_3$, die sich auch mittels mehrerer Dünnschicht-Technik zu erstellenden Magnetköpfen nur schwer realisieren. Außerdem ist das mit Magnetköpfen dieses Typs zu erhaltende Lesesignal im allgemeinen verhältnismäßig schwach, da bei diesem Typ mit einer einzigen Spulenwicklung sowohl die Leseals auch die Schreibfunktion ausgeübt werden muß.

Auch aus "Patent Abstracts of Japan", Vol. 7, No. 188 (P-217) [1333], 17.8.1983, zu JP-A-5 888 812 ist ein ringkopfähnlicher Magnetkopf mit Haupt- und Hilfspol zu entnehmen. Dieser Magnetkopf enthält zusätzlich zu diesem (ersten) Hilfspol noch einen weiteren Hilfspol, der unterhalb des Aufzeichnungsmediums angeordnet ist. Zwischen dem Hauptpol und dem ersten Hilfspol einerseits und dem weiteren Hilfspol andererseits ist also das Aufzeichnungsmedium hindurchzuführen. Dieser Magnetkopf soll praktisch nur mit seinem Hauptpol die Schreibfunktion ausüben. Hierzu ist der erste Hilfspol aus einem Material erstellt, dessen Sättigungsmagnetisierung geringer als die des Materials des Hauptpols ist. Um diesen ersten Hilfspol während der Schreibfunktion in die magnetische Sättigung zu treiben und somit ein Mitschreiben zu unterdrücken, wird mittels des weiteren Hilfspols ein hinreichend starkes Magnetfeld erzeugt. Hierzu ist der weitere Hilfspol mit einer besonderen Erregerwicklung umgeben. Ein derartiger Aufbau ist jedoch äußerst aufwendig und läßt sich in Dünnschicht-Technik kaum realisieren.

Es sind auch Magnetköpfe vorgeschlagen worden, bei denen auf eine Verwendung eines besonderen Hilfspoles gänzlich verzichtet wird ("IEEE Trans.Magn.", vol. MAG-18, no. 6, November 1982, Seiten 1170 bis 1172; EP-A-0 071 489). Für diesen Magnetkopftyp ist dementsprechend nur ein einziger, dem Aufzeichnungsmedium zugewandter Magnetschenkel vorgesehen, dem eine z. B. planare Schreib- und Lesespulenwicklung zugeordnet ist. Der notwendige magnetische Rückschluß erfolgt dann durch den Streufluß. Mit einem solchen, auch als Einzel-Pol-Kopf bezeichneten Magnetkopf läßt sich zwar eine für eine Aufzeichnung bei hohen Bitdichten erforderliche hinreichend große Feldstärke zum Ummagnetisieren der Speicherschicht erreichen. Und auch ein möglichst steiler Abfall des Magnetfeldes an der ablaufenden Kante des Kopfes, wie er für geringe Übergangsbreiten der Magnetisierungsumkehr vorauszusetzen ist, kann damit realisiert werden (vgl. z. B. "IEEE Trans.Magn.", vol. MAG-19, no. 5, Sept. 1983, Seiten 2239 bis 2244). Jedoch ist mit diesem Kopftyp bei fehlendem Hilfspol kein ausreichend großes Lesesignal zu gewinnen.

Aufgrund dieser erwähnten Probleme beim Lesen sind auch Systeme bekannt, bei denen die Funktion des Schreibens und Lesens von jeweils getrennten Köpfen auszuüben ist. Diese Köpfe lassen sich dann an die jeweilige Funktion besser anpassen (vgl. z. B. "IEEE Trans.Magn.", vol. MAG-16, no; 5, September 1980, Seiten 967 bis 972). Dementsprechend werden für das Lesen an sich bekannte Ringköpfe verwendet, während das Schreiben mit den erwähnten Einzel-Pol-Köpfen durchzuführen ist. Ein bekannter, hierfür geeigneter Schreibkopf weist auf seiner der Speicherschicht des Aufzeichnungsmediums zugewandten Seite einen Hauptpol mit longitudinaler Ausdehnung von z. B. 3 $\mu$m auf, dem auf der Rückseite des Aufzeichnungsmediums ein wesentlich ausgedehnterer Hilfspol gegenüberliegt. Der zweite, nur zum Lesen benötigte Ringkopf hat hingegen eine Spaltweite von z. B. 0,2 $\mu$m (vgl. "IEEE Trans.Magn.", vol. MAG-17, no. 6, November 1981, Seiten 2538 bis 2540). Entsprechende Systeme zum magnetischen Lesen und Schreiben mit an die jeweilige Funktion angepaßten besonderen Köpfen sind jedoch konstruktiv verhältnismäßig aufwendig.

Aufgabe der vorliegenden Erfindung ist es deshalb, den eingangs genannten Magnetkopf dahingehend zu verbessern, daß bei ihm zum einen die erwähnten Probleme bei den kombinierten Köpfen hinsichtlich ihres mechanischen Aufbaues verringert sind und zum anderen eine schaltbare Schreib- und Lesefunktion mit jeweils verhältnismäßig hohem Wirkungsgrad zu gewährleisten ist. Insbesondere soll also eine hinreichend große Lesespannung mit diesem Magnetkopf zu erzeugen sein, wobei die bei Einzel-Pol-Köpfen gegebenen Vorteile zumindest weitgehend gewährleistet sein sollen.

Diese Aufgabe wird erfindungsgemäß mit den im Kennzeichen des Hauptanspruchs angegebenen Merkmalen gelöst.

Aufgrund dieser besonderen Ausgestaltungen des erfindungsgemäßen Magnetkopfes wird beim Schreiben bereits mit einem Schreibstrom sehr niedriger Stromstärke die (erste) Magnetschicht des ersten Magnetschenkels mit der niedrigen Sättigungsmagnetisierung zumindest im Bereich des Magnetpoles in die Sättigung getrieben. Dieser Bereich wirkt dann wie eine Sperre für den magnetischen Fluß in diesem Schenkel, so daß dieser Magnetschenkel an der Schreibfunktion praktisch nicht teilnimmt. Der erfindungsgemäße Magnetkopf schreibt dann also vorteilhaft mit dem anderen (zweiten) Magnetschenkel quasi als Einzel-Pol-Kopf die Informationen in das Aufzeichnungsmedium. Hierbei wird eine gute Magnetflußrückführung erreicht, indem der - bis auf den schmalen Luftspalt zwischen den Magnetpolen - geschlossene Flußführungspfad eines ringkopfähnlichen Aufbaus gewährleistet ist. Der bei den bekannten Einzel-Pol-Köpfen gegebene offene Aufbau, bei dem die Magnetflußrückführung über eine große Luftstrecke erfolgt, wird also vermieden, so daß der Wirkungsgrad des erfindungsgemäßen Einzel-Polschreibkopfes dementsprechend erhöht ist.

Da Flußänderungen beim Lesen erheblich kleiner sind als beim Schreiben, besteht praktisch keine Gefahr, daß der Magnetschenkel dünnerer Schichten ergeben können, jeweils mindestens doppelt so groß wie die Dicke $d_1$. Bei dem in der Figur angenommenen Schreiben wird dann bereits bei einer sehr niedrigen Stromstärke $l_1$ in der Spulenwicklung 16 die Magnetschicht 7' gesättigt, zumal mit der ausgebildeten Verjüngung der Dicke des Magnetschenkels 7 von $d_1 + d_2$ im Bereich 13 auf $d_1$ im bereich 10 eine entsprechende Erhöhung der magnetischen Feldstärke zumindest an dem Pol $P_1$ verbunden ist. Die übrigen Magnetschichten 7'' und 8' würden erst etwa bei Stromstärke $l_2$ bzw. $l_3$ gesättigt werden, für die ungefähr gilt:

$$l_2 \approx \frac{MS_2}{MS_1} \cdot \frac{d_2}{d_1} \cdot l_1 > l_1$$

und

$$l_3 \approx \frac{MS_3}{MS_1} \cdot \frac{d_3}{d_1} \cdot l_1 > l_1$$

Wie aus den Formeln ersichtlich, ist zusätzlich zu der erfindungsgemäßen Auswahl von Materialien vorbestimmter Sättigungsmagnetisierungen auch durch höhere Werte der Dicken $d_2$ und $d_3$ gegenüber der Dicke $d_1$ zu gewährleisten, daß bei einem bestimmten Schreibstrom $l_1$ zwar die Schicht 7' mit dem Polbereich 10 in die Sättigung getrieben ist, die anderen Schichten 7'' und 8' hingegen noch nicht gesättigt sind. Aufgrund dieser Verhältnisse wirkt dann der erfindungsgemäße Magnetkopf mit seinem Magnetschenkel 8 beim Schreiben vorteilhaft praktisch wie ein Einzel-Pol-Magnetkopf, wobei über die weitere magnetische Schicht 7'' des ersten Magnetschenkels 7 eine verbesserte Magnetflußführung erreicht und damit der Wirkungsgrad des Einzel-Pol-Kopfes gegenüber dem offenen Aufbau bekannter Köpfe wesentlich erhöht ist. Beim Lesen hingegen arbeitet der Kopf als gewöhnlicher Ringkopf mit dem bekannt guten Wirkungsgrad von beispielsweise etwa 70 %.

Bei dem in der Figur dargestellten Magnetkopf nach der Erfindung wurde davon ausgegangen, daß sein nichtschreibender Magnetschenkel 7 neben der Magnetschicht 7' aus einem Material mit verhältnismäßig niedriger Sättigungsmagnetisierung $MS_1$ eine weitere Magnetschicht 7'' aufweist, die aus einem Material mit vergleichsweise größerer Sättigungsmagnetisierung $MS_2$ besteht. Gegebenenfalls kann man jedoch auf eine derartige weitere Schicht 7'' völlig verzichten.

Dementsprechend läßt sich auch der in der Figur dem Substrat 3 zugewandte Magnetschenkel 7 als schreibender Schenkel vorsehen, falls seine Magnetschicht 7' und die gegebenenfalls noch vorzusehende weitere Magnetschicht 7'' aus dem Material mit der höheren Sättigungsmagnetisierung bestehen. In dem Falle muß der äußere Magnetschenkel 8 zumindest in seinem Endbereich 11 mit dem Pol $P_2$ aus dem Material mit der niedrigeren Sättigungsmagnetisierung erstellt werden, so

daß dann gilt: $MS_3 < MS_1$. Hierbei ist zu gewährleisten, daß der ablaufende Schenkel 8 nicht mehr die von dem ersten Schenkel 7 geschriebenen Informationen stört.

Die Herstellung des erfindungsgemäßen Magnetkopfes wird vorteilhaft in an sich bekannter Dünnschicht- bzw. Dünnfilm-Technik vorgenommen. Das hierbei verwendete Substrat besteht z. B. aus TiC und $Al_2O_3$. Zum Aufbau der Magnetschenkel werden dünne Magnetschichten aus speziellen Legierungen oder weichmagnetischen amorphen Materialien hoher Permeabilität und der vorbestimmten Sättigungsmagnetisierungen durch Sputtern, Aufdampfen oder galvanische Abscheidung auf das Substrat aufgebracht und jeweils durch nicht-magnetische Zwischenlagen voneinander getrennt. Die leichte Richtung der Magnetisierung kann z. B. beim Aufbringen der jeweiligen Schicht durch ein angelegtes Magnetfeld induziert werden. Sie liegt im allgemeinen immer senkrecht zur Richtung des magnetischen Flusses in dem magnetischen Leitkörper, d. h. im Bereich der Magnetpole $P_1$ und $P_2$ im wesentlichen parallel zur Oberfläche des Aufzeichnungsmediums M. Die aufgewachsenen unterschiedliche Schichten werden durch an sich bekannte Techniken wie Fotolithographie, Plasma-, Ionenstrahl- oder naßchemisches Ätzen strukturiert und damit die Magnetschenkel des Kopfes ausgebildet. Zur Herstellung der für die Schreib- und Lesefunktion vorgesehenen Spulenwicklung werden Schichten aus Cu oder Al oder Au abgeschieden und entsprechend strukturiert. Die für den Aufbau des Magnetkopfes noch erforderlichen einzelnen Isolationsschichten, insbesondere die Spaltschicht, sind jedoch in der Figur aus Gründen der Übersichtlichkeit nicht ausgeführt.

Von besonderem Vorteil für die Fertigungstechnologie des erfindungsgemäßen Magnetkopfes ist es, daß er hinsichtlich seiner Formgebung und Ausführung weitgehend bisher bekannten Köpfen zur longitudinalen Magnetisierung entspricht.

**Patentansprüche**

1. Magnetkopf (2) mit einem in Dünnfilm-Technik erstellten schichtweisen Aufbau auf einem nichtmagnetischen Substrat (3) für ein Aufzeichnungsmedium (M), das mit einer magnetisierbaren Speicherschicht (4) versehen ist, in welche längs einer Spur Informationen durch senkrechte (vertikale) Magnetisierung der Speicherschicht (4) einzuschreiben sind, welcher Magnetkopf (2) einen den magnetischen Fluß führenden ringkopfähnlichen Leitkörper (6) mit zwei Magnetschenkeln (7, 8) aufweist, die aus mehreren magnetischen Schichten (7', 7'', 8') aus hochpermeablem Material vorbestimmter Sättigungsmagnetisierung (MS) bestehen und deren dem Aufzeichnungsmedium (M) zugewandte Pole (P1, P2) in Bewegungsrichtung (v) des Kopfes (2) gesehen hintereinander und mit vorbestimmtem Abstand (w) zueinander angeordnet sind und die einen Zwischenraum (17) begrenzen, durch welchen sich die Windungen einer zumindest weitgehend flachen Schreib-/Lesespulenwicklung (16) erstrecken, dadurch gekennzeichnet, daß

- der erste Magnetschenkel (7) zumindest im Bereich (10) seines Poles (P$_1$) höchstens eine in Bewegungsrichtung (v) gemessene Dicke (d$_1$) von 2 μm hat und aus mindestens einer (ersten) magnetischen Schicht (7') mit einer vorbestimmten verhältnismäßig niedrigen Sättigungsmagnetisierung (MS$_1$) besteht, und

- der zweite Magnetschenkel (8) zumindest im Bereich (11) seines Poles (P$_2$) mindestens eine magnetische Schicht (8') enthält, deren Sättigungsmagnetisierung (MS$_3$) größer als die Sättigungsmagnetisierung (MS$_1$) der (ersten) magnetischen Schicht (7') des ersten Magnetschenkels (7) ist,
so daß zumindest der Bereich (10) des Poles (P$_1$) der (ersten) magnetischen Schicht (7') des ersten Magnetschenkels (7) bei der Schreibfunktion aufgrund eines in der Spulenwicklung (16) fließenden Schreibstromes (I$_1$) in die magnetische Sättigung getrieben ist.

2. Magnetkopf nach Anspruch 1, dadurch gekennzeichnet, daß der erste Magnetschenkel (7) außer der einen ersten magnetischen Schicht (7') mit der niedrigen Sättigungsmagnetisierung (MS$_1$) außerhalb des Bereiches (10) seines Poles (P$_1$) mindestens eine weitere magnetische Schicht (7'') aufweist, deren Sättigungsmagnetisierung (MS$_2$) größer als die niedrige Sättigungsmagnetisierung (MS$_1$) der ersten magnetischen Schicht (7') dieses Schenkels (7) ist.

3. Magnetkopf nach Anspruch 1 oder 2, dadurch gekennzeichnet, daß die weitere magnetische Schicht (7'') des ersten Magnetschenkels (7) und/oder die magnetische Schicht (8') des zweiten Magnetschenkels (8) jeweils eine Sättigungsmagnetisierung (MS$_2$ bzw. MS$_3$) aufweisen, die mindestens doppelt so groß wie die Sättigungsmagnetisierung (MS$_1$) der ersten magnetischen Schicht (7') des ersten Magnetschenkels (7) ist.

4. Magnetkopf nach einem der Ansprüche 1 bis 3, dadurch gekennzeichnet, daß die erste magnetische Schicht (7') des ersten Magnetschenkels (7) aus einem Material mit einer Sättigungsmagnetisierung (MS$_1$) von weniger als 8 kA/cm, vorzugsweise unter 5 kA/cm, besteht.

5. Magnetkopf nach einem der Ansprüche 1 bis 4, dadurch gekennzeichnet, daß die weitere magnetische Schicht (7'') des ersten Magnetschenkels (7) und/oder die mindestens eine magnetische Schicht (8'), des zweiten Magnetschenkels (8) jeweils aus einem Material mit einer Sättigungsmagnetisierung (MS$_2$ bzw. MS$_3$) von mindestens 10 kA/cm, vorzugsweise mehr als 11 kA/cm bestehen.

6. Magnetkopf nach einem der Ansprüche 1 bis 5, dadurch gekennzeichnet, daß die Dicke (d$_1$) der ersten magnetischen Schicht (7') des ersten Magnetschenkels (7) höchstens halb so groß ist wie die Dicke (d$_2$ bzw. d$_3$) der weiteren magnetischen Schicht (7'') dieses Schenkels (7) bzw. der magnetischen Schicht (8') des zweiten Magnetschenkels (8) in dem Bereich (13) des Zwischenraumes (17) zwischen den beiden Magnetschenkeln (7, 8).

7. Magnetkopf nach einem der Ansprüche 1 bis 6, dadurch gekennzeichnet, daß sein den Magnetfluß führender Leitkörper (6) aus weichmagnetischem Material besteht.

8. Magnetkopf nach einem der Ansprüche 1 bis 7, dadurch gekennzeichnet, daß sein den Magnetfluß führender Leitkörper (6) aus einem Material besteht, dessen leichte Magnetisierung zumindest weitgehend senkrecht zur Führungsrichtung des magnetischen Flusses gerichtet ist.

9. Magnetkopf nach einem der Ansprüche 1 bis 8, dadurch gekennzeichnet, daß sein den Magnetkopf führender Leitkörper (6) aus einem Material besteht, dessen relative Permeabilität (μ$_r$) mindestens 1000, vorzugsweise mindestens 2000 beträgt.

**Claims**

1. Magnetic head (2) made with the thin-film technique, with a construction in layers on a nonmagnetic substrate (3) for a recording medium (M), which is equipped with a magnetizable storage layer (4), in which, along a track, information is able to be registered through perpendicular (vertical) magnetization of the storage layer (4), which magnetic head (2) has a conducting body (6) like an annular recording head, directing the magnetic flux, with two magnet limbs (7, 8), which consist of several magnetic layers (7', 7'', 8') of highly permeable material of predetermined saturation magnetization (MS) and the poles (P$_1$, P$_2$) of which, directed towards the recording medium (M) are arranged, when seen from the direction of movement (v) of the head (2), behind one another and at a predetermined distance (w) from one another, and which define a clearance (17) through which the turns of an at least substantially flat writing/reading coil winding (16) extend, characterised in that

- the first magnet limb (7) has, at least in the region (10) of its pole (P$_1$), a thickness (d$_1$) of at most 2μm, measured in the direction of movement (v), and consists of at least one (first) magnetic layer (7') with a predetermined relatively low saturation magnetization (MS$_1$) and

- the second magnet limb (8) contains, at least in the region (11) of its pole (P$_2$), at least one magnetic layer (8'), the saturation magnetization (MS$_3$) of which is greater than the saturation magnetization (MS$_1$) of the (first) magnetic layer (7') of the first magnet limb (7),

so that at least the region (10) of the pole (P₁) of the (first) magnetic layer (7') of the first magnet limb (7) during the writing function is driven into magnetic saturation because of a writing current (I₁) flowing in the coil winding (16).

2. Magnetic head according to claim 1, characterized in that, outside the region (10) of its pole (P₁), the first magnet limb (7) has, apart from the one first magnetic layer (7') with the low saturation magnetization (MS₁), at least one further magnetic layer (7''), the saturation magnetization (MS₂) of which is greater than the low saturation magnetization (MS₁) of the first magnetic layer (7') of this limb (7).

3. Magnetic head according to claim 1 or 2, characterised in that the further magnetic layer (7'') of the first magnet limb (7) and/or the magnetic layer (8') of the second magnet limb (8) have in each case a saturation magnetization (MS₂ or MS₃), which is at least double the saturation magnetization (MS₁) of the first magnetic layer (7') of the first magnet limb (7).

4. Magnetic head according to one of claims 1 to 3, characterised in that the first magnetic layer (7') of the first magnet limb (7) consists of a material with a saturation magnetization (MS₁) of less than 8 kA/cm, preferably below 5 kA/cm.

5. Magnetic head according to one of claims 1 to 4, characterised in that the further magnetic layer (7'') of the first magnet limb (7) and/or at least the one magnetic layer (8') of the second magnet limb (8) consists in each case of a material with a saturation magnetization (MS₂ or MS₃) of at least 10 kA/cm, preferably more than 11 kA/cm.

6. Magnetic head according to one of claims 1 to 5, characterised in that the thickness (d₁) of the first magnetic layer (7') of the first magnet limb (7) is at the most half as great as the thickness (d2 or d3) of the further magnetic layer (7'') of this limb (7) or of the magnetic layer (8') of the second magnet limb (8) in the region (13) of the clearance (17) between the two magnet limbs (7, 8).

7. Magnetic head according to one of claims 1 to 6, characterised in that its conducting body (6) directing the magnetic flux is made of a soft magnetic material.

8. Magnetic head according to one of claims 1 to 7, characterised in that its conducting body (6) directing the magnetic flux is made of a material, the easy magnetization of which is directed so that it is at least substantially perpendicular to the conducting direction of the magnetic flux.

9. Magnetic head according to one of claims 1 to 8, characterised in that its conducting body (6) directing the magnetic flux is made of a material, the relative permeability (μᵣ) of which is at least 1000, preferably at least 2000.

**Revendications**

1. Tête magnétique (2) possédant une structure en couches, réalisée selon la technique des couches minces, sur un substrat amagnétique (3) pour un support d'enregistrement (M), qui possède une couche de mémorisation (4) pouvant être aimantée, dans laquelle des informations doivent être enregistrées le long d'une piste au moyen d'une aimantation perpendiculaire (verticale) de la couche de mémorisation (4), laquelle tête magnétique (2) possède un corps de guidage (6) en forme de tête annulaire guidant le flux magnétique et comportant deux branches magnétiques (7, 8), qui sont constituées par plusieurs couches magnétiques (7', 7'', 8') réalisées en un matériau très perméable possédant une aimantation de saturation (MS) prédéterminée et dont les pôles (P1, P2) tournés vers le support d'enregistrement (M) sont disposés l'un derrière l'autre lorsqu'on regarde dans la direction de déplacement (v) de la tête (2) et à une distance réciproque prédéterminée (w), ces branches magnétiques limitant un espace intercalaire (17) à travers lequel s'étendent les spires d'un enroulement (16), au moins dans une large mesure plat, d'une bobine d'enregistrement/lecture, caractérisée par le fait que

-la première branche magnétique (7) possède, au moins dans la zone (10) de son pôle (P₁), au maximum une épaisseur (d₁) de 2 μm mesurée dans la direction de déplacement (v), et est constituée par au moins une (première) couche magnétique (7') possédant une aimantation de saturation (MS₁) prédéterminée, relativement faible, et

- la seconde branche magnétique (8) contient, au moins dans la zone (11) de son pôle (P₂), au moins une couche magnétique (8'), dont l'aimantation de saturation (MS₃) est supérieure à l'aimantation de saturation (MS₁) de la (première) couche magnétique (7') de la première branche magnétique (7),

de sorte qu'au moins la zone (10) du pôle (P₁) de la (première) couche magnétique (7') de la première branche magnétique (7) est forcée dans le domaine de la saturation magnétique lors de la fonction d'enregistrement, en raison du passage d'un courant d'enregistrement (I₁) dans l'enroulement de bobine (16).

2. Tête magnétique suivant la revendication 1, caractérisée par le fait que la première branche magnétique (7) comporte, en dehors de la première couche magnétique (7') possédant une aimantation de saturation (MS₁) faible à l'extérieur de la zone (10) de son pôle (P₁), au moins une autre couche magnétique (7'), dont l'aimantation de saturation (MS₂) est supérieure à la faible aimantation de saturation (MS₁) de la première couche magnétique (7') de cette branche (7).

3. Tête magnétique suivant la revendication 1 ou 2, caractérisée par le fait que l'autre couche magnétique (7'') de la première branche magnétique (7) et/ou la couche magnétique (8') de la seconde branche magnétique (8) possèdent des aimantations de saturation respectives ($MS_2$ ou $MS_3$), au moins égales au double de l'aimantation de saturation ($MS_1$) de la première couche magnétique (7') de la première branche magnétique (7).

4. Tête magnétique suivant l'une des revendications 1 à 3, caractérisée par le fait que la première couche magnétique (7') de la première branche magnétique (7) est réalisée en un matériau possédant une aimantation de saturation ($MS_1$) inférieure à 8 kA/cm, et de préférence inférieure à 5 kA/cm.

5. Tête magnétique suivant l'une des revendications 1 à 4, caractérisée par le fait que l'autre couche magnétique (7'') de la première branche magnétique (7) et/ou au moins une couche magnétique (8') de la seconde branche magnétique (8) sont constituées respectivement par un matériau possédant une aimantation de saturation ($MS_2$ ou $MS_3$) égale au moins à 10 kA/cm, et de préférence supérieure à 11 kA/cm.

6. Tête magnétique suivant l'une des revendications 1 à 5, caractérisée par le fait que l'épaisseur ($d_1$) de la première couche magnétique (7') de la première branche magnétique (7) est au maximum égale à la moitié de l'épaisseur ($d_2$ ou $d_3$) de l'autre couche magnétique (7'') de cette branche (7) ou de la couche magnétique (8') de la seconde branche magnétique (8), dans la zone (13) de l'espace intercalaire (17) situé entre les deux branches magnétiques (7 et 8).

7. Tête magnétique suivant l'une des revendications 1 à 6, caractérisée par le fait que son corps de guidage (6), qui guide le flux magnétique, est réalisé en un matériau magnétique doux.

8. Tête magnétique suivant l'une des revendications 1 à 7, caractérisée par le fait que son corps de guidage (6), qui guide le flux magnétique, est réalisé en un matériau dont l'aimantation facile est dirigée au moins dans une large mesure perpendiculairement à la direction de guidage du flux magnétique.

9. Tête magnétique suivant l'une des revendications 1 à 8, caractérisée par le fait que son corps de guidage (6) qui guide le flux magnétique, est réalisé en un matériau dont la perméabilité relative ($\mu_r$) est égale au moins à 1000 et de préférence au moins à 2000.